# EUROPEAN PATENT SPECIFICATION

(11) **EP 3 464 717 B1**
(45) Date of publication and mention of the grant of the patent: **18.02.2026**
(21) Application number: 17728973.3
(22) Date of filing: 26.05.2017
(51) Int. Cl.: D21F 5/10, F26B 13/18, F16L 27/08

(54) **LOCKING SEAT PIVOT BALL SYPHON ELBOW**
SCHWENKKUGELSIPHONKRÜMMER MIT VERRIEGELUNG MIT FEDERTELLER
COUDE DE SIPHON À BILLE DE PIVOT DE SIÈGE DE VERROUILLAGE

(30) Priority: 26.05.2016 US 201662341763 P
(43) Date of publication of application: 10.04.2019
(73) Proprietor: Kadant Johnson LLC, Three Rivers, MI 49093 (US)
(72) Inventor: HENRY, Timothy N., Marcellus, MI 49067 (US); SIBLEY, Eugene F., Marcellus, MI 49067 (US)
(74) Representative: Zacco Norway AS
(86) International application number: PCT/US2017/034701
(87) International publication number: WO 2017/205753

(56) References cited:
- EP-A1- 2 017 517
- US-A- 2 934 831

## Description

### TECHNICAL FIELD

This disclosure relates generally to a siphon elbow used to connect two pipes in fluid communication, and more particularly, to a siphon elbow having a pivoting portion that is automatically locked into an angled, operating configuration by an internal locking system without use of an external tool.

### BACKGROUND

Papermaking machines typically include three main sections: forming, pressing and drying. The raw material, called furnish, is largely water and is converted to sheet form in these three sections. The first section, forming, uses vacuum and other means to remove most of the water. At the same time, the fibers of the sheet are formed into the desired mat. The second section, pressing, removes more water by pressing the sheet between felted rolls. The final section, drying, uses rotating heat transfer drums, also called dryers. These dryers are heated by a heat transfer medium, typically steam. A dryer section usually includes many such dryers arranged in single or multiple tiers. The sheet is threaded through the arrangement of dryers, being heated by the rotating dryers so that most or all of the remaining water is evaporated from the sheet.

Steam introduced into each dryers' cylinder condenses as it cools, and the condensate collects on the inside wall of the cylinder. A siphon assembly can be employed to remove this condensate. The siphon assembly essentially defines a condensate outlet conduit extending from an inlet end positioned close to the interior surface of the cylinder's inside wall, through and out the dryer's journal and to fixed piping beyond.

To allow the siphon assembly to be inserted into a dryer's cylinder through the narrow passageway defined in the journal and still have the end of the siphon assembly positioned close to the inside surface of the dryer cylinder, siphon assemblies typically comprise three main components: a horizontal siphon pipe, so named because it is oriented generally horizontally within the dryer, a vertical siphon pipe, so named because, when deployed in the dryer, it extends at an angle in the vertical plane defined relative to the horizontal siphon pipe, and a siphon elbow which interconnects the two siphon pipes in fluid communication. The siphon elbow is generally comprised of fixed and pivoting components. The pivoting components allow the vertical siphon pipe to be selectively pivoted between a first configuration, where the pivoting component is longitudinal aligned with the horizontal siphon pipe so that the siphon assembly can be passed through the passageway in the dryer's journal, and a second configuration, where the vertical siphon pipe is oriented at an angle relative to the horizontal siphon pipe so that the inlet end is disposed closer to the dryer cylinder's interior surface.

EP2017517 discloses a siphon elbow of the type used to pivotally connect in fluid communication separate horizontal and vertical siphon pipes of a siphon system. The siphon elbow comprises a first elongated body, a second elongated body, and an internal locking system. The first elongated body has a bore extending therethrough. An inner surface defines the bore of the first elongated body, and a portion of the inner surface has a partially spherical indentation. The second elongated body has a bore extending therethrough and a generally spherical extension on a first end that pivotally engages the portion of the inner surface of the first elongated body that has the partially spherical indentation. The intemal locking system is disposed in at least one of the bore of the first elongated body or the second elongated body and comprises a locking retainer having a bore extending therethrough and a first end configured to matingly engage the first end of the second elongate body. The locking retainer is biased towards a position of contact with the generally spherical extension by means of a spring. When the second elongated body is in a first position relative to the first elongated body, the locking retainer is biased into contact with the generally spherical extension, but does not inhibit its rotation. When the second elongated body is moved to an operating condition in which an angle formed between the first elongated body and the second elongated body is less than 180-degrees, the locking retainer is urged into an open end of the generally spherical extension, and locks the second elongated body in the operating configuration.

### SUMMARY

The invention is defined by the features of claim 1. According to the invention we provide a siphon elbow for pivotally connecting a first pipe and a second pipe in fluid communication. The siphon elbow comprises a first elongated body, a second elongated body, and an internal locking system. The first elongated body has a bore extending therethrough. An inner surface defines the bore of the first elongated body, and a portion of the inner surface has a partially spherical indentation. The second elongated body has a bore extending therethrough and a generally spherical extension on a first end that pivotally engages the portion of the inner surface of the first elongated body that has the partially spherical indentation. The second elongated body is provided with a first chamfer which extends along a circumference of the generally spherical extension. The internal locking system is disposed in at least one of the bore of the first elongated body or the second elongated body and comprises a locking retainer having a bore extending therethrough and a first end configured to matingly engage the first end of the second elongate body. The first end of the locking retainer has a second chamfer extending along a circumference thereof. The internal locking system locks the second elongated body into an operating configuration in which an angle formed between the first elongated body and the second elongated body is less than 180-degrees. Pivoting of the second elongated body from an installation configuration in which the angle is approximately 180-degrees to the operating configuration activates the internal locking system to cause contact between the first and second chambers to thereby lock the second elongated body in the operating configuration.

The second elongated body and the generally spherical extension can be integrally formed. The first pipe can be connected to an outer surface of the second elongated body, and the second pipe can be connected to the inner surface of the first elongated body. The first pipe can rest against a shoulder formed in the outer surface of the second elongated body opposite the generally spherical extension. The second elongated body can rest within a recess that is formed along an end of the first elongated body when the second elongated body is locked in the operating configuration. A fluid communication channel can be formed through the first pipe, the first elongated body, the second elongated body, the locking retainer, and the second pipe.

The internal locking system can further include a spring that biases the locking retainer toward the second elongated body. A first end of the spring can engage a shoulder formed along the bore of the locking retainer. The internal locking system can further include a spring seat having a bore extending therethrough and a shoulder formed along the bore. A second end of the spring can engage the shoulder of the spring seat. The spring seat, the spring, and the locking retained can be disposed within the bore of the first elongated body. A fluid communication channel can be formed through the first pipe, the first elongated body, the second elongated body, the locking retainer, the spring, the spring seat, and the second pipe. The internal locking system can lock the second elongated body into the operating configuration without use of a tool external to the siphon elbow, the first pipe, and the second pipe.

**In** another implementation, the siphon elbow comprises a first elongated body, a second elongated body, a locking retainer, and a spring. The first elongated body has a bore extending therethrough and a recess formed along an end of the first elongated body. An inner surface defines the bore of the first elongated body and a portion of the inner surface has a partially spherical indentation. The second elongated body has a bore extending therethrough and a generally spherical extension on a first end that pivotally engages the portion of the inner surface of the first elongated body that has the partially spherical indentation. The second elongated body pivots into the recess of the first elongated body in a locked configuration, where the first pipe is angled relative to the second pipe. The locking retainer is within the first elongated body and has a first end configured to matingly engage a second end of the second elongated body and a bore extending therethrough. The spring is within the first elongated body and biases the locking retainer toward the second elongated body. The spring and the locking retainer cooperate to lock the second elongated body in the locked configuration once the siphon elbow has pivoted from a substantially straight configuration into the locked configuration.

The second elongated body and the generally spherical extension can be integrally formed. The first pipe can be connected to an outer surface of the second elongated body opposite the generally spherical extension. The first end of the second elongated body can have a chamfer with a substantially frusto-conical configuration that slides along a chamfer with a substantially frusto-conical configuration on the first end of the locking retainer.

**In** yet another implementation, a method of installing a siphon assembly into a cylinder through an internal passageway. The method includes providing the siphon assembly with a first pipe and a second pipe connected to and in fluid communication with a siphon elbow. The siphon elbow has a first configuration, where the siphon assembly is substantially straight, and a second configuration, where the siphon assembly is bent. The method also includes inserting the siphon assembly in the first configuration into the cylinder through the internal passageway until at least the first pipe has cleared the internal passageway and the second pipe is at least partially within the internal passageway. The method further includes rotating the siphon assembly until the first pipe moves into the second configuration. An internal locking system within the siphon elbow locks the siphon elbow into the second configuration once the siphon elbow transitions into the second configuration from the first configuration.

The internal locking system can lock the siphon elbow into the second configuration without the use of a tool external to the siphon assembly. The first pipe can be connected to an outer surface of the siphon elbow.

### BRIEF DESCRIPTION OF THE DRAWINGS

The invention is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a side cut-away view of a dryer with a siphon elbow of a siphon assembly in a first configuration.
FIG. 2 is a side cut-away view of the dryer with the siphon elbow of the siphon assembly in a second configuration.
FIG. 3 is an exploded, perspective view of the siphon elbow.
FIG. 4 is a cross-sectional view of the siphon elbow in the first configuration.
FIG. 5 is a cross-sectional view of the siphon elbow in the second configuration.

### DETAILED DESCRIPTION

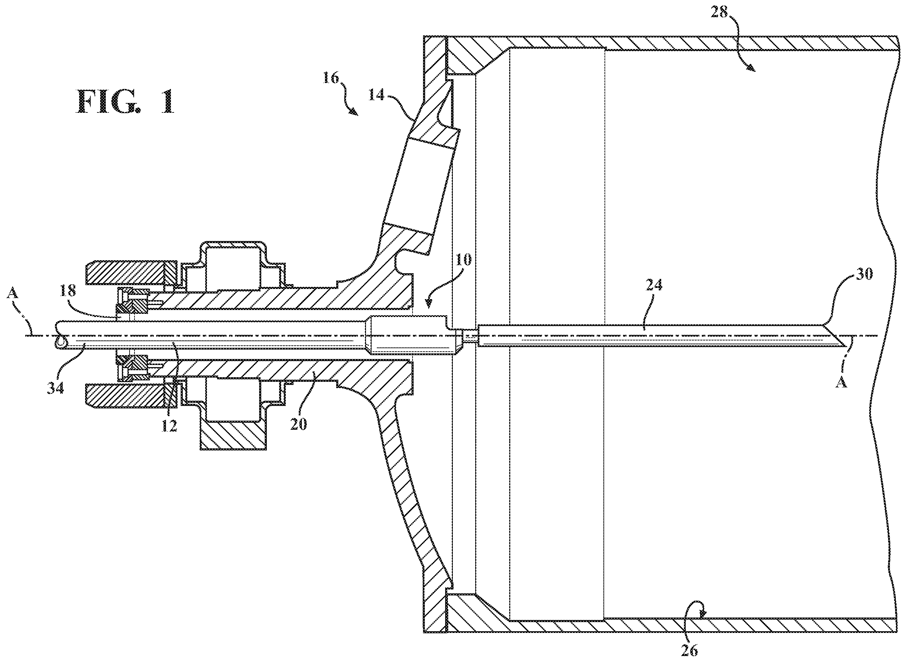

FIGS. 1-5 illustrate a siphon elbow 10 that allows a siphon assembly 12 to be substantially straight and substantially rigid as the siphon assembly 12 is inserted into a rotating cylinder 14 of a steam-heated dryer 16 through an internal passageway 18 in a journal 20 of the steam-heated dryer 16. Once inside the rotating cylinder 14, a second elongated body 22 of the siphon elbow 10 pivots so that a first pipe 24 that is attached to the siphon elbow 10 can be positioned close to an inner surface 26 of the rotating cylinder 14, which allows the siphon assembly 12 to remove condensate that collects on the inner surface 26 of the rotating cylinder 14. As will be explained, the siphon elbow 10 provides an internal locking system that results in the siphon elbow 10 having a smaller diameter than was previously possible and does not require an external tool to lock the siphon elbow 10 in the pivoted or bent configuration.

The steam-heated dryer 16 that the siphon elbow 10 is shown with in FIGS. 1-2 is typical of one used in the paper-making industry. However, the steam-heated dryer 16 is only an exemplary environment for the siphon elbow 10. It will be appreciated by those skilled in the art that the siphon elbow 10 can be used in other operational environments and in other industries.

**In** the illustrated, non-limiting example, the rotating cylinder 14 of the steam-heated dryer 16 includes at least one rotary joint at an end of the journal 20. The journal 20 is hollow along an axial length of the journal 20, which defines the internal passageway 18 that extends through the journal 20. The rotating cylinder 14 of the steam-heated dryer 16 defines an interior space 28 that is in communication with the internal passageway 18 of the journal 20. When the steam-heated dryer 16 is operated, the rotating cylinder 14 rotates coaxially with the axial length of the journal 20. As steam fed into the rotating cylinder 14 cools and condenses, condensate collects on the inner surface 26 of the rotating cylinder 14. The siphon assembly 12 can be used to remove this condensate.

To remove the condensate from the rotating cylinder 14 of the steam-heated dryer 16, a fluid communication channel is formed through the siphon assembly 12 that extends from a first end 30 of the first pipe 24 to a first end 32 of a second pipe 34. The first end 32 of the second pipe 34 can be fixedly or removably connected to an outlet (not shown) that accepts the condensate that has been removed from the steam-heated dryer 16. Examples of possible connections include welding or threading.

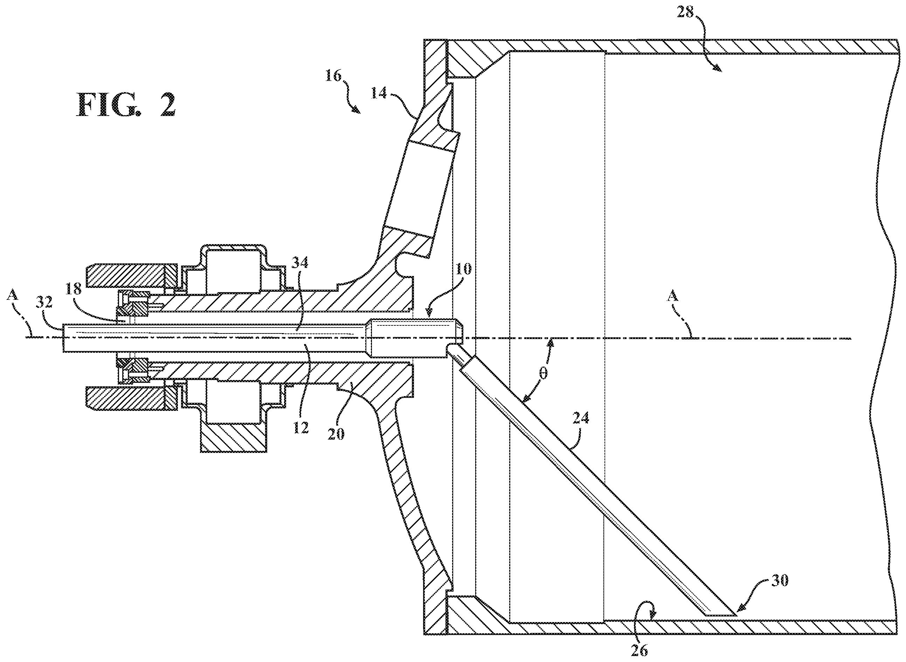

So that the siphon assembly 12 can be inserted into the interior space 28 of the rotating cylinder 14 through the internal passageway 18 of the journal 20, the siphon assembly 12 provides a first configuration, which is shown in FIG. 1. In the first configuration, the first pipe 24, the siphon elbow 10, and the second pipe 34 are coaxially aligned along axis A and extend substantially straight. Once at least the first pipe 24 is in the interior space 28 of the rotating cylinder 14 and has substantially cleared the internal passageway 18 of the journal 20, the siphon assembly 12 can transition into a second configuration, which is shown in FIG. 2. In the second configuration, the first pipe 24 is no longer coaxially aligned with the siphon elbow 10 and the second pipe 34 and is instead angled or bent away from the siphon elbow 10 so that the first end 30 of the first pipe 24 is adjacent to the inner surface 26 of the rotating cylinder 14. An angle θ formed between axis A and the first pipe 24 when the siphon assembly 12 is in the second configuration is less than 180-degrees and can be less than 90-degrees. In the illustrated, non-limiting example, the angle θ is approximately 45-degrees. The transition of the siphon assembly 12 from the first configuration into the second configuration is facilitated by the siphon elbow 10 and the weight of the first pipe 24.

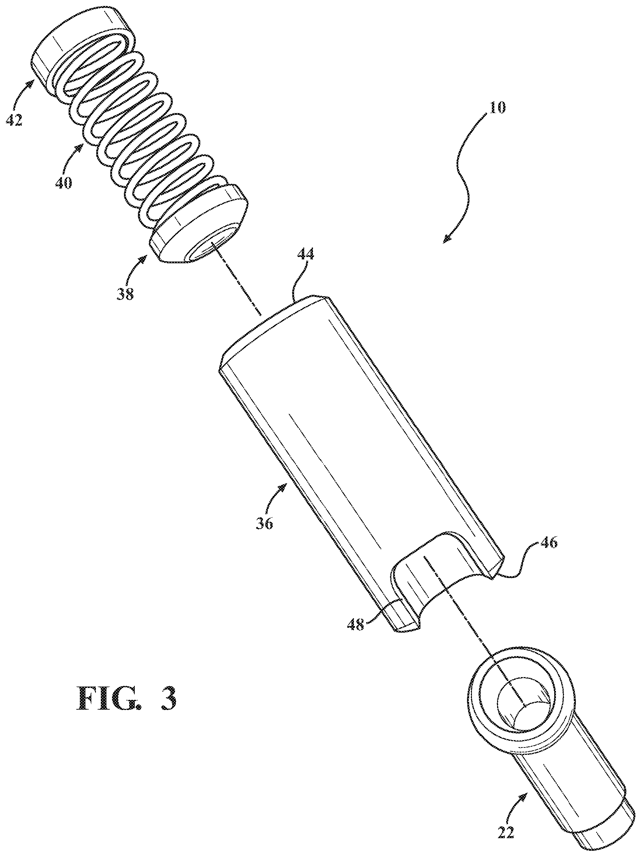

The siphon elbow 10 is shown in detail in FIGS. 3-5 and can be fabricated from any suitable material, such as stainless steel. The siphon elbow can be comprised of the second elongated body 22, a first elongated body 36, a locking retainer 38, a spring 40, and a spring seat 42. The first elongated body 36 can have a substantially cylindrical or tubular configuration with a through bore 50 extending longitudinally from a first end 44 to a second end 46 of the first elongated body 36 along axis A. Outer surfaces of the first end 44 and the second end 46 of the first elongated body 36 can be provided with chamfers 52. The second pipe 34 can be fixedly or removably connected to the first end 44 of the first elongated body 36 with fluid communication established with the through bore 50 of the first elongated body 36 and the second pipe 34.

To assist with automatically locking the siphon elbow 10 in the second configuration without the use of an external tool, an inner surface 54 of first elongated body 36 can be provided with a partially spherical indentation 56 that is formed closer to the second end 46 than the first end 44 of the first elongated body 36. The partially spherical indentation 56 can be formed as an arcuate transition between two portions of the first elongated body 36 having different thicknesses. In the illustrated, non-limiting example, the thickness of the portion of the first elongated body 36 that includes the first end 44 is less than the thickness of the portion of the first elongated body 36 that includes the second end 46. This results in the partially spherical indentation 56 being the arcuate transition between the two portions.

So that the first pipe 24 can pivot relative to the second pipe 34, a recess 48 can be formed in the first elongated body 36 along the second end 46. In the illustrated, non-limiting example, the recess 48 has a substantially U-shaped configuration with a chamfer 58 along a bottom edge that is opposite the second end 46 of the first elongated body 36. The recess 48 can be in fluid communication with the through bore 50 that extends through the first elongated body 36.

The second elongated body 22 can have a substantially cylindrical or tubular configuration with a through bore 60 extending from a first end 62 to a second end 64 of the second elongated body 22. The first end 62 of the second elongated body 22 can be provided with a shoulder 86 that the first pipe 24 can rest against when the first pipe 24 is fixedly or removably connected to the second elongated body 22 of the siphon elbow 10. When the first pipe 24 is connected to the first end 62 of the second elongated body 22, the second elongated body 22 and the first pipe 24 can be coaxially aligned, and fluid communication is established between the through bore 60 of the second elongated body 22, the first pipe 24, and the through bore 50 of the first elongated body 36.

To allow the second elongated body 22 to pivot relative to the first elongated body 36, the second end 64 of the second elongated body 22 can be provided with a generally spherical extension 66 that is complementary to the partially spherical indentation 56 of the first elongated body 36. The generally spherical extension 66 can be integrally formed with the second elongated body 22. The generally spherical extension 66 of the second elongated body 22 can have a diameter that is slightly smaller than a diameter of the partially spherical indentation 56 of the first elongated body 36. Because the through bore 60 extends through the generally spherical extension 66, the generally spherical extension 66 can be hollow. Where the through bore 60 opens on the second end 64 of the second elongated body 22, the generally spherical extension 66 can have a chamfer 68 extending along the circumference of the generally spherical extension 66. The chamfer 68 can have a substantially frusto-conical configuration.

The locking retainer 38 can have a substantially cylindrical or tubular configuration with a through bore 74 extending from a first end 70 to the second end 72 of the locking retainer 38. The locking retainer 38 can have a shoulder 88 formed in the through bore 74 that allows a first end 78 of the spring 40 to bias the locking retainer 38 toward the second elongated body 22. Use of the shoulder 88 can result in the through bore 74 having two different diameters. In the illustrated, non-limiting example, the diameter of the through bore 74 at the first end 70 of the locking retainer 38 is greater than the diameter of the through bore 74 at the second end 72 of the locking retainer 38. To assist with locking the second elongated body 22 is the second configuration, the second end 72 of the locking retainer 38 can be provided with a chamfer 76 along the circumference of the second end 72 that matingly and/or complementarily engages the chamfer 68 of the second elongated body 22 when the siphon elbow 10 is in the second configuration. For example, the chamfer 76 of the locking retainer 38 can have a substantially frusto-conical configuration that is opposite the frusto-conical configuration of the chamfer 68 of the second elongated body 22.

To assist with the biasing of the locking retainer 38 toward the second elongated body 22, the siphon elbow 10 can be provided with the spring seat 42, which can be positioned within the through bore 50 of the first elongated body 36 between the second pipe 34 and the spring 40. A through bore 82 can extend through the spring seat 42 so that fluid communication can be maintained between the through bore 50 of the first elongated body 36 and the second pipe 34. An outer diameter of the spring seat 42 can be slightly smaller than a diameter of the through bore 50 of the first elongated body 36. The spring seat 42 can have a shoulder 84 formed in the through bore 82 that a second end 80 of the spring 40 compresses against. If the locking retainer 38 is omitted, the second end 80 of the spring 40 can compress against an end of the second pipe 34.

The siphon assembly 12 is installed into the rotating cylinder 14 of the steam-heated dryer 16 by inserting the first end of the first pipe 24 through the internal passageway 18 of the journal 20 when the siphon assembly 12 is in the first configuration. As shown in FIG. 1, the recess 48 in the first elongated body 36 can be positioned upward so that the second elongated body 22 rests substantially horizontal against the first elongated body 36 with the generally spherical extension 66 of the second elongated body 22 flush against the partially spherical indentation 56 of the first elongated body 36. Once the siphon assembly 12 is fed far enough into the rotating cylinder 14 of the steam-heated dryer 16 that the first pipe 24 has cleared the internal passageway 18 of the journal 20, the siphon assembly 12 is slowly rotated about axis A until the recess 48 in the first elongated body 36 is positioned downward. This allows gravity to pull the first pipe 24 downward toward the inner surface 26 of the rotating cylinder 14 by pivoting along path P, which is substantially perpendicular to axis A.

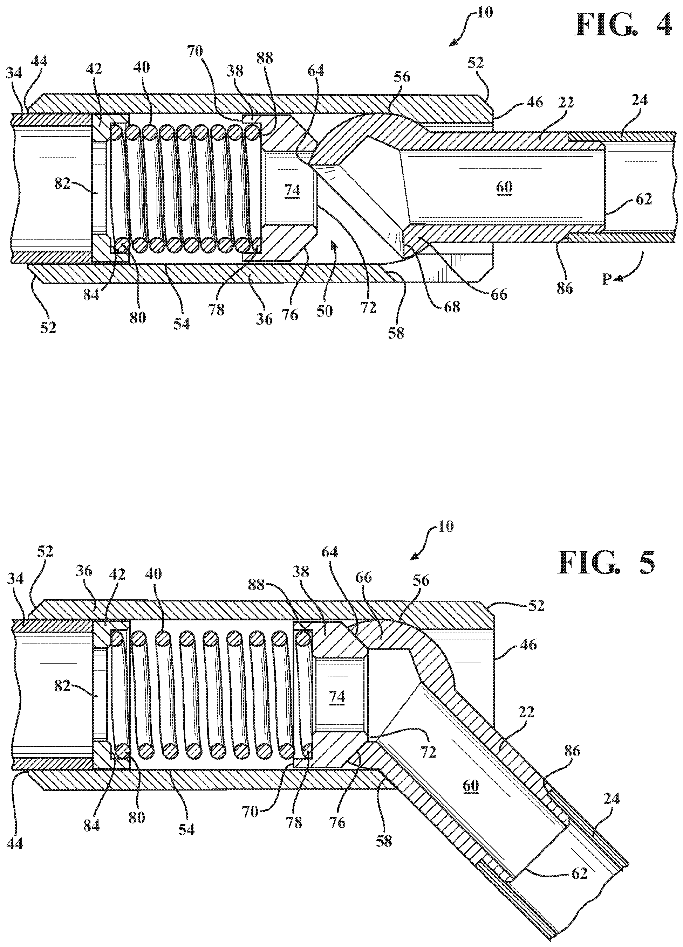

As the first pipe 24 pivots downward along path P, the generally spherical extension 66 of the second elongated body 22 slides or pivots along the partially spherical indentation 56 of the first elongated body 36 and the chamfer 68 of the second elongated body 22 slides along the chamfer 76 of the locking retainer 38. Once the second elongated body 22 rests against the chamfer 58 of the first elongated body 36 as illustrated in FIG. 5, the biasing force of the spring 40 automatically locks the chamfer 76 of the locking retainer 38 into the chamfer 68 of the second elongated body 22 and the weight of the first pipe 24 assists with keeping the siphon elbow 10 in the second configuration. As a result, the siphon elbow 10 is locked in the second configuration without the use of an external tool.

While the invention has been described in connection with certain embodiments, it is to be understood that the invention is not to be limited to the disclosed embodiments but, on the contrary, is intended to cover various modifications and equivalent arrangements included within the scope of the appended claims.

## Claims

1. A siphon elbow (10) for pivotally connecting a first pipe (24) and a second pipe (34) in fluid communication, the siphon elbow (10) comprising:
a first elongated body (36) having a bore (50) extending therethrough, wherein an inner surface (54) defines the bore (50) of the first elongated body (36) and a portion of the inner surface (54) has a partially spherical indentation (56);
a second elongated body (22) having a bore (60) extending therethrough and a generally spherical extension (66) that pivotably engages the portion of the inner surface (54) of the first elongated body (36) having the partially spherical indentation (56); and
an internal locking system disposed in at least one of the bore (50) of the first elongated body (36) or the bore (60) of the second elongated body (22), the internal locking system comprising a locking retainer (38) having a bore (74) extending therethrough and a first end (72) configured to matingly engage the first end (64) of the second elongate body (22), and a spring (40) to bias the locking member (38) toward the second elongated body (22),wherein the internal locking system locks the second elongated body (22) into an operating configuration in which an angle formed between the first elongated body (36) and the second elongated body (22) is less than 180-degrees;
**characterized in that** a first end (64) of the second elongated body (22) has a first chamfer (68) extending along a circumference of the generally spherical extension (66), the first end (72) of the locking retainer (38) has a second chamfer (76) extending along a circumference thereof, and pivoting of the second elongated body (22) from an installation configuration in which the angle is approximately 180-degrees to the operating configuration activates the internal locking system to cause the first chamfer (68) to matingly and / or complementarily engage with the second chamfer (76) to thereby lock the second elongated body (22) in the operating configuration through the biasing force of the spring (40).

2. The siphon elbow (10) of claim **1,** further comprising:
the first pipe (24), wherein the second elongated body (22) and the generally spherical extension (66) are integrally formed and the first pipe (24) is connected to an outer surface of the second elongated body (22).

3. The siphon elbow (10) of claim 2, wherein the first pipe (24) rests against a shoulder (86) formed in the outer surface of the second elongated body (22) opposite the generally spherical extension (66).

4. The siphon elbow (10) of claim **1,** wherein the second elongated body (22) rests within a recess (48) formed along an end (46) of the first elongated body (36) when the second elongated body (22) is locked in the operating configuration.

5. The siphon elbow (10) of claim **1,** wherein a fluid communication channel is formed through the first pipe (24), the first elongated body (36), the second elongated body (22), the locking retainer (38), and the second pipe (34).

6. The siphon elbow (10) of claim **1,** wherein a first end (78) of the spring (40) engages a shoulder (88) formed along the bore (74) of the locking retainer (38).

7. The siphon elbow (10) of claim 6, the internal locking system further comprising:
a spring seat (42) having a bore (82) extending therethrough and a shoulder (84) formed along the bore (82), wherein a second end (80) of the spring (40) engages the shoulder (84) of the spring seat (42).

8. The siphon elbow (10) of claim 7, wherein the spring seat (42), the spring (40), and the locking retainer (38) are disposed within the bore (50) of the first elongated body (36).

9. The siphon elbow (10) of claim 8, wherein a fluid communication channel is formed through the first pipe (24), the first elongated body (36), the second elongated body (22), the locking retainer (38), the spring (40), the spring seat (42), and the second pipe (34).

10. The siphon elbow (10) of claim 1, wherein the internal locking system locks the second elongated body (22) into the operating configuration without use of a tool external to the siphon elbow (10), the first pipe (24), and the second pipe (34).

## Patentansprüche

1. Siphonbogen (10) zum schwenkbaren Verbinden eines ersten Rohrs (24) und eines zweiten Rohrs (34) in Fluidkommunikation, wobei der Siphonbogen (10) umfasst:
einen ersten Langkörper (36) mit einer Bohrung (50), die sich durch diesen erstreckt, wobei eine Innenfläche (54) die Bohrung (50) des ersten Langkörpers (36) definiert und ein Teil der Innenfläche (54) eine teilweise kugelförmige Einbuchtung (56) aufweist;
einen zweiten Langkörper (22) mit einer Bohrung (60), die sich durch diesen erstreckt, und einer im Allgemeinen kugelförmigen Verlängerung (66), die in den Teil der Innenfläche (54) des ersten Langkörpers (36) mit der teilweise kugelförmigen Einbuchtung (56) schwenkbar eingreift, und
ein internes Verriegelungssystem, das in mindestens einer der Bohrungen (50) des ersten Langkörpers (36) oder der Bohrung (60) des zweiten Langkörpers (22) angeordnet ist, wobei das interne Verriegelungssystem einen Verriegelungshalter (38) mit einer Bohrung (74), die durch diesen hindurchgeht, und einem ersten Ende (72), das dazu konfiguriert ist, passend in das erste Ende (64) des zweiten Langkörpers (22) einzugreifen, und eine Feder (40) umfasst, um das Verriegelungselement (38) in Richtung des zweiten Langkörpers (22) vorzuspannen, wobei das interne Verriegelungssystem den zweiten Langkörper (22) in einer Betriebskonfiguration verriegelt, in der ein zwischen dem ersten Langkörper (36) und dem zweiten Langkörper (22) gebildeter Winkel kleiner als 180 Grad ist;
**dadurch gekennzeichnet, dass** ein erstes Ende (64) des zweiten Langkörpers (22) eine erste Fase (68) aufweist, die sich entlang eines Umfangs der allgemein kugelförmigen Verlängerung (66) erstreckt, während das erste Ende (72) des Verriegelungshalters (38) eine zweite Fase (76) aufweist, die sich entlang eines Umfangs davon erstreckt, und wobei das Schwenken des zweiten Langkörpers (22) von einer Installationskonfiguration, in der der Winkel etwa 180 Grad zur Betriebskonfiguration beträgt, das interne Verriegelungssystem aktiviert, um zu veranlassen, dass die erste Fase (68) passend und/oder komplementär mit der zweiten Fase (76) in Eingriff kommt, um dadurch den zweiten Langkörper (22) durch die Vorspannkraft der Feder (40) in der Betriebskonfiguration zu verriegeln.

2. Siphonbogen (10) nach Anspruch 1, ferner umfassend:
das erste Rohr (24), wobei der zweite Langkörper (22) und die allgemein kugelförmige Verlängerung (66) einteilig ausgebildet sind und das erste Rohr (24) mit einer Außenfläche des zweiten Langkörpers (22) verbunden ist.

3. Siphonbogen (10) nach Anspruch 2, wobei das erste Rohr (24) an einer Schulter (86) anliegt, die in der Außenfläche des zweiten Langkörpers (22) gegenüber der allgemein kugelförmigen Verlängerung (66) ausgebildet ist.

4. Siphonbogen (10) nach Anspruch 1, wobei der zweite Langkörper (22) in einer Aussparung (48) liegt, die entlang eines Endes (46) des ersten Langkörpers (36) ausgebildet ist, wenn der zweite Langkörper (22) in der Betriebskonfiguration verriegelt ist.

5. Siphonbogen (10) nach Anspruch 1, wobei ein Fluidkommunikationskanal durch das erste Rohr (24), den ersten Langkörper (36), den zweiten Langkörper (22), den Verriegelungshalter (38) und das zweite Rohr (34) gebildet ist.

6. Siphonbogen (10) nach Anspruch 1, wobei ein erstes Ende (78) der Feder (40) in eine Schulter (88) eingreift, die entlang der Bohrung (74) des Verriegelungshalters (38) ausgebildet ist.

7. Siphonbogen (10) nach Anspruch 6, wobei das interne Verriegelungssystem ferner umfasst:
einen Federsitz (42) mit einer Bohrung (82), die sich durch diesen erstreckt, und einer Schulter (84), die entlang der Bohrung (82) ausgebildet ist, wobei ein zweites Ende (80) der Feder (40) in die Schulter (84) des Federsitzes (42) eingreift.

8. Siphonbogen (10) nach Anspruch 7, wobei der Federsitz (42), die Feder (40) und der Verriegelungshalter (38) innerhalb der Bohrung (50) des ersten Langkörpers (36) angeordnet sind.

9. Siphonbogen (10) nach Anspruch 8, wobei ein Fluidkommunikationskanal durch das erste Rohr (24), den ersten Langkörper (36), den zweiten Langkörper (22), den Verriegelungshalter (38), die Feder (40), den Federsitz (42) und das zweite Rohr (34) gebildet ist.

10. Siphonbogen (10) nach Anspruch 1, wobei das interne Verriegelungssystem den zweiten Langkörper (22) ohne Verwendung eines Werkzeugs außerhalb des Siphonbogens (10), des ersten Rohrs (24) und des zweiten Rohrs (34) in der Betriebskonfiguration verriegelt.

## Revendications

1. Coude de siphon (10) pour relier de manière pivotante un premier tuyau (24) et un second tuyau (34) en communication fluidique, le coude de siphon (10) comprenant :
un premier corps allongé (36) ayant un alésage (50) s'étendant à travers celui-ci, dans lequel une surface interne (54) définit l'alésage (50) du premier corps allongé (36) et une portion de la surface interne (54) a une indentation partiellement sphérique (56) ;
un second corps allongé (22) ayant un alésage (60) s'étendant à travers celui-ci et une extension généralement sphérique (66) qui vient en prise de manière pivotante avec la portion de la surface interne (54) du premier corps allongé (36) ayant l'indentation partiellement sphérique (56) ; et
un système de verrouillage interne disposé dans au moins un de l'alésage (50) du premier corps allongé (36) ou de l'alésage (60) du second corps allongé (22), le système de verrouillage interne comprenant un dispositif de retenue de verrouillage (38) ayant un alésage (74) s'étendant à travers celui-ci et une première extrémité (72) configurée pour venir en prise de manière complémentaire avec la première extrémité (64) du second corps allongé (22), et un ressort (40) pour solliciter le dispositif de retenue de verrouillage (38) vers le second corps allongé (22), dans lequel le système de verrouillage interne verrouille le second corps allongé (22) dans une configuration de fonctionnement dans laquelle un angle formé entre le premier corps allongé (36) et le second corps allongé (22) est inférieur à 180 degrés ;
**caractérisé en ce qu'**une première extrémité (64) du second corps allongé (22) a un premier chanfrein (68) s'étendant le long d'une circonférence de l'extension généralement sphérique (66), la première extrémité (72) du dispositif de retenue de verrouillage (38) a un second chanfrein (76) s'étendant le long d'une circonférence de celle-ci, et le pivotement du second corps allongé (22) à partir d'une configuration d'installation dans laquelle l'angle est d'environ 180 degrés à la configuration de fonctionnement active le système de verrouillage interne pour amener le premier chanfrein (68) à venir en prise de manière complémentaire et/ou mutuelle avec le second chanfrein (76) pour ainsi verrouiller le second corps allongé (22) dans la configuration de fonctionnement par la force de sollicitation du ressort (40).

2. Coude de siphon (10) selon la revendication 1, comprenant en outre :
le premier tuyau (24), dans lequel le second corps allongé (22) et l'extension généralement sphérique (66) sont =- formés intégralement et le premier tuyau (24) est relié à une surface externe du second corps allongé (22).

3. Coude de siphon (10) selon la revendication 2, dans lequel le premier tuyau (24) repose contre un épaulement (86) formé dans la surface externe du second corps allongé (22) opposé à l'extension généralement sphérique (66).

4. Coude de siphon (10) selon la revendication 1, dans lequel le second corps allongé (22) repose à l'intérieur d'un évidement (48) formé le long d'une extrémité (46) du premier corps allongé (36) lorsque le second corps allongé (22) est verrouillé dans la configuration de fonctionnement.

5. Coude de siphon (10) selon la revendication 1, dans lequel un canal de communication fluidique est formé à travers le premier tuyau (24), le premier corps allongé (36), le second corps allongé (22), le dispositif de retenue de verrouillage (38), et le second tuyau (34).

6. Coude de siphon (10) selon la revendication 1, dans lequel une première extrémité (78) du ressort (40) vient en prise avec un épaulement (88) formé le long de l'alésage (74) du dispositif de retenue de verrouillage (38).

7. Coude de siphon (10) selon la revendication 6, le système de verrouillage interne comprenant en outre :
un siège de ressort (42) ayant un alésage (82) s'étendant à travers celui-ci et un épaulement (84) formé le long de l'alésage (82), dans lequel une seconde extrémité (80) du ressort (40) vient en prise avec l'épaulement (84) du siège de ressort (42).

8. Coude de siphon (10) selon la revendication 7, dans lequel le siège de ressort (42), le ressort (40), et le dispositif de retenue de verrouillage (38) sont disposés à l'intérieur de l'alésage (50) du premier corps allongé (36).

9. Coude de siphon (10) selon la revendication 8, dans lequel un canal de communication fluidique est formé à travers le premier tuyau (24), le premier corps allongé (36), le second corps allongé (22), le dispositif de retenue de verrouillage (38), le ressort (40), le siège de ressort (42), et le second tuyau (34).

10. Coude de siphon (10) selon la revendication 1, dans lequel le système de verrouillage interne verrouille le second corps allongé (22) dans la configuration de fonctionnement sans utilisation d'un outil externe au coude de siphon (10), au premier tuyau (24), et au second tuyau (34).
